(19) Europäisches Patentamt

European Patent Office

Office européen des brevets

(11) **EP 3 089 516 A1**

(12) **DEMANDE DE BREVET EUROPEEN**

(43) Date de publication:
02.11.2016 Bulletin 2016/44

(51) Int Cl.:
*H04W 36/16* (2009.01)    *H04W 48/20* (2009.01)
*H04W 84/04* (2009.01)    *H04W 28/08* (2009.01)

(21) Numéro de dépôt: 16166866.0

(22) Date de dépôt: 25.04.2016

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: 28.04.2015 FR 1553823

(71) Demandeur: **Commissariat à l'Energie Atomique et aux Energies Alternatives**
**75015 Paris (FR)**

(72) Inventeurs:
• **DE DOMENICO, Antonio**
  **38000 GRENOBLE (FR)**
• **KTENAS, Dimitri**
  **38340 VOREPPE (FR)**
• **SAVIN, Valentin**
  **38000 GRENOBLE (FR)**

(74) Mandataire: **Brevalex**
**56, Boulevard de l'Embouchure**
**B.P. 27519**
**31075 Toulouse Cedex 2 (FR)**

(54) **MÉTHODE D'ASSOCIATION DE TERMINAUX À DES CELLULES DANS UN RÉSEAU HÉTÉROGÈNE**

(57)    L'invention concerne une méthode d'association de terminaux avec des cellules dans un réseau comprenant au moins une macro-cellule et une pluralité de petites cellules. Selon cette méthode d'association, chaque terminal effectue (210) pour chaque association possible un mesure de puissance sur la liaison radio et en déduit un indicateur de qualité de cette liaison. On sélectionne ensuite (220) le sous-ensemble des associations permettant de respecter les contraintes d'utilisation des différents terminaux. Pour chaque association possible de ce sous-ensemble, on calcule (230) une métrique caractéristique de la capacité globale du réseau (240) et l'on en déduit (250) une association optimale maximisant cette métrique.

FIG. 2

**Description**

**DOMAINE TECHNIQUE**

La présente invention concerne de manière générale le domaine des télécommunications cellulaires, plus particulièrement pour des réseaux hétérogènes tels que des réseaux de type LTE (*Long Term Evolution)* ou LTE-A (*Long Term Evolution Advanced).*

**ÉTAT DE LA TECHNIQUE ANTÉRIEURE**

Les réseaux de télécommunications cellulaires classiques (3G) doivent faire face à des contraintes de plus en plus sévères en termes de qualité de service (QoS) en raison de nouveaux usages et besoins des utilisateurs. Pour faire face à ces contraintes, il a été proposé de recourir à des réseaux hétérogènes mettant en oeuvre plusieurs couches superposées de cellules. Classiquement un réseau hétérogène comprend une première couche composée de macro-cellules (*macro*-cells) et une seconde couche composée de cellules de taille sensiblement plus petite, dites petites cellules (*small cells*) déployées de manière *ad hoc* au sein des macro-cellules. Le terme de « petites cellules » sera utilisé dans la suite de manière générique. En particulier, ce terme doit être compris comme couvrant les notions de pico-cellules et de femto-cellules également présentes dans la littérature.

On trouvera une description des réseaux hétérogènes dans l'article de S. Parkvall et al. intitulé « Heterogeneous network deployment in LTE », Ericsson Review, vol. 2011.

Par rapport aux réseaux cellulaires classiques, les réseaux hétérogènes posent toutefois des problèmes délicats de répartition de charge ainsi que d'interférence entre macro-cellules et petites cellules. On trouvera une description de cette problématique dans l'article de R. Madan et al. intitulé « Cell association and interference coordination in heterogeneous LTE-A » publié dans IEEE Journal on Selected Areas in Communications, Vol. 28, No. 9, Dec. 2010, pp. 1479-1489.

Une des principales difficultés consiste en effet à effectuer une association entre les terminaux ou UEs (*User Equipments*) des différents utilisateurs et les stations de base. Autrement dit, pour un terminal donné, il convient de rechercher quelle est la station de base, que ce soit celle de la macro-cellule ou l'une de celles des petites cellules, avec laquelle il établira la liaison radio.

Les mécanismes d'association proposés actuellement pour les réseaux hétérogènes reposent exclusivement sur la qualité des liaisons radio entre terminaux et stations de base.

Plus précisément dans un réseau LTE, chaque terminal mesure la puissance des signaux de référence spécifiques de cellule ou CSRSs (*Cell Specific Reference Signals*) émis par la station de base et effectue la moyenne de la puissance des CSRSs sur les différentes sous-porteuses (ou éléments de ressource selon la terminologie LTE) qui les portent. La puissance ainsi mesurée dénommée RSRP (*Reference Signal Received Power*) est utilisée par le terminal pour comparer la qualité des liaisons radio avec les différentes stations de base, notamment lorsque celui-ci est en état de veille.

Lorsqu'un terminal est en communication avec la station de base, celui-ci peut déterminer la puissance totale de signal reçu dénommé RSSI (*Received Signal Strength Indicator*). L'indicateur RSSI représente la puissance totale du signal reçu par le terminal, c'est-à-dire la puissance du signal transmis plus le bruit et les interférences. Le terminal en déduit un indice de qualité de réception des signaux de référence dénommé RSRQ (*Reference Signal Received Quality),* défini comme le rapport *RSRP / RSSI* entre la puissance des signaux de référence et la puissance totale de signal reçu. Lorsqu'un terminal est en communication l'indice de qualité RSRQ donne une information sur la qualité de la liaison radio avec la station de base.

Selon l'état de veille ou de communication du terminal, il est possible de l'associer à une station de base à partir des valeurs de *RSRP* ou de *RSRQ* voire à partir des deux valeurs à la fois. La station de base à laquelle il est associé peut être soit celle servant la macro-cellule, soit l'une de celles servant les petites cellules.

En pratique, un réseau hétérogène est caractérisé par un important déséquilibre entre la puissance émise par la station de base servant la macro-cellule et les puissances émises par les stations de base servant les petites cellules. Ce déséquilibre se traduit par une proportion importante de terminaux associés à la macro-cellule (c'est-à-dire à la station de base servant la macro-cellule) plutôt qu'à une petite cellule (c'est-à-dire à la station de base servant une petite cellule).

Ce déséquilibre, et par voie de conséquence cette association préférentielle à la macro-cellule, conduit à une réduction de la capacité globale du réseau, une augmentation du niveau d'interférence perçue sur les liaisons montantes et une diminution de la durée de vie des batteries des terminaux mobiles. En effet, ceux-ci doivent émettre à plus forte puissance pour, d'une part, se connecter avec une station de base servant une macro-cellule généralement plus éloignée que les stations de base servant les petites cellules et, d'autre part, pour combattre l'interférence sur les liaisons montantes).

Afin de compenser le déséquilibre de charge entre macro-cellule et petites cellules, il a été proposé un mécanisme correctif se traduisant par une expansion de la couverture des petites cellules. Plus précisément, lorsqu'un terminal reçoit un signal d'une station de base servant une petite cellule, il corrige la puissance reçue de cette dernière en lui ajoutant un biais positif prédéterminé (par exemple +3dB ou +6dB). Ainsi, dans le procédé d'association précité, basé sur les valeurs *RSRP* et/ou *RSRQ,* l'association avec une petite cellule se trouve artificiellement favorisée. On trouvera une description du mécanisme correctif précité dans l'article de I. Güvenç intitulé « Capacity and fairness analysis of heterogeneous networks with range expansion and interference coordination » publié dans IEEE Comm. Letters, Vol. 15, No. 10, Oct. 2011, pp. 1084-1087.

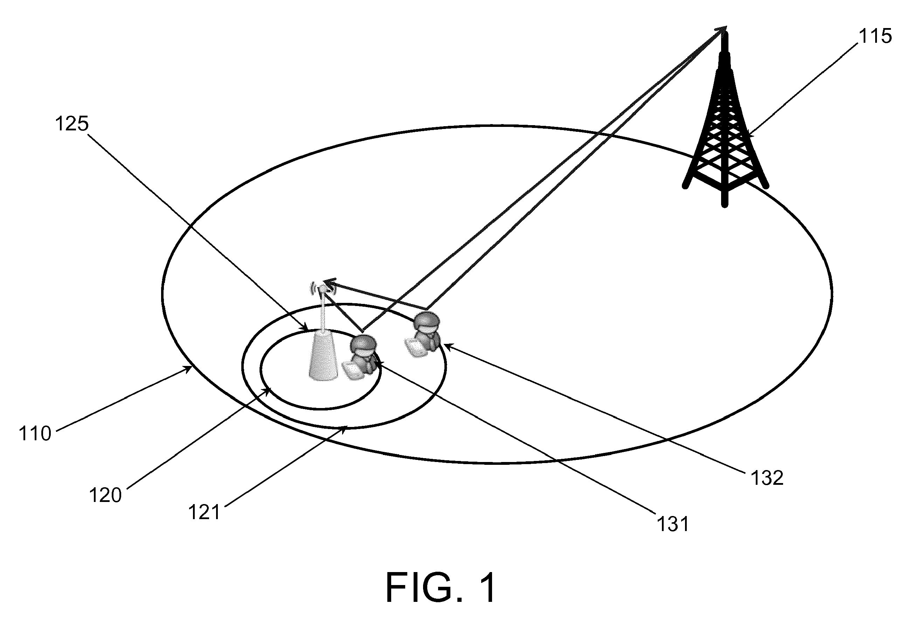

La Fig. 1 représente de manière schématique le mécanisme d'expansion d'une petite cellule dans un réseau hétérogène.

On a représenté en 110 une macro-cellule servie par une station de base 115, en 120 une petite cellule avant son expansion et en 121 cette même petite cellule lorsque après que l'on a ajouté un biais positif à la puissance reçue de la station de base 125 servant la petite cellule. Ainsi l'utilisateur 132 qui se situait hors de la petite cellule avant son expansion est servi par la station de base 125 après son expansion.

Si ce mécanisme permet effectivement de transférer une partie de la charge de la macro-cellule aux petites cellules, il n'est cependant pas sans effets négatifs sur la performance du réseau. En effet, un terminal en bordure d'une petite cellule, tel que le terminal de l'utilisateur 132, pourra souffrir d'un faible rapport signal sur bruit sur sa liaison descendante en raison de l'interférence due à la macro-cellule et le cas échéant aux macro-cellules voisines. En outre, un biais important (conduisant à une expansion excessive) peut conduire à une surcharge de certaines petites cellules. Il est alors nécessaire de recourir à une adaptation dynamique du biais, ce qui rend le procédé d'association particulièrement complexe.

La plupart des mécanismes d'association entre terminaux et cellules dans un réseau hétérogène visent à optimiser seulement la capacité globale du réseau sans tenir compte des besoins des différents utilisateurs. Il peut en résulter qu'un utilisateur n'ayant besoin que d'une faible qualité de service se voit attribuer une liaison de très bonne qualité alors qu'un utilisateur voisin ayant besoin d'une très bonne qualité de service obtiendra une liaison de qualité moindre.

L'objectif de la présente invention est donc de proposer un procédé d'association entre terminaux et cellules dans un réseau hétérogène qui ne soit pas affecté par les limitations ci-dessus, et en particulier qui permette de prendre en compte les besoins des différents utilisateurs.

**EXPOSÉ DE L'INVENTION**

La présente invention est définie par une méthode d'association de terminaux à des cellules dans un réseau de télécommunication hétérogène comprenant au moins une macro-cellule et une pluralité de cellules, dites petites cellules, de taille sensiblement plus faible que ladite macro-cellule et déployées au sein de cette dernière, la macro-cellule et les desdites petites cellules étant servies par une pluralité de stations de base, chaque terminal pouvant établir une liaison radio avec une station de base au moyen d'une ressource en fréquence, selon laquelle :

chaque terminal effectue une mesure de puissance sur la ressource en fréquence de manière à obtenir, pour chaque association possible associant ce terminal à une station de base, un indice de qualité d'une liaison radio entre ce terminal et cette station de base ;
on sélectionne parmi l'ensemble ($\Gamma$) des associations possibles entre les terminaux et les stations de base, un sous-ensemble ($\Gamma_L$) d'associations satisfaisant à au moins une contrainte (*L*) relative à l'utilisation desdits terminaux, la sélection étant réalisée à partir des indices de qualité des liaisons radio ;
on calcule pour chaque association possible dudit sous-ensemble, une métrique caractéristique de la capacité globale des liaisons radio entre terminaux et stations de base associés par cette association possible et l'on détermine une association optimale (*S\**) maximisant cette métrique ;
on établit des liaisons radio entre les terminaux et les stations de base associés par l'association optimale (*S\**) ainsi déterminée.

Selon une première variante, une puissance de consigne étant attribuée à chaque terminal, la contrainte relative à l'utilisation des terminaux est un pourcentage maximal des terminaux pouvant émettre avec des puissances supérieures à leurs puissances de consigne respectives.

Selon une seconde variante, un débit de consigne étant attribué à chaque terminal, la contrainte relative à l'utilisation des terminaux est un pourcentage maximal de terminaux pouvant recevoir des débits de données inférieurs à leurs débits de consigne respectifs.

Selon une troisième variante, un niveau de qualité de service (QoS) étant requis par chaque terminal, la contrainte relative à l'utilisation des terminaux est un pourcentage maximal de terminaux pouvant disposer de niveaux de qualité de service inférieurs aux niveaux de qualité de service qu'ils ont respectivement requis.

La métrique des liens radio entre les terminaux $UE_j$, $j = 1,..,J$ et les stations de base $BS_i$, $i = 1,...,N$ est peut être définie par $\displaystyle\sum_{(UE_j, BS_i = \mathrm{S}(UE_j))} C_{ij}$ où $C_{ij}$ est la capacité du canal entre la station de base $BS_i$ et le terminal $UE_j$, et $S$ est une association possible dudit sous-ensemble.

Alternativement, la métrique des liens radio entre les terminaux $UE_j$, $j = 1,...,J$ et les stations de base $BS_i$, $i =1,...,N$ peut être définie par $\displaystyle\sum_{(UE_j, BS_i = \mathrm{S}(UE_j))} \log C_{ij}$ où $C_{ij}$ est la capacité du canal entre la station de base $BS_i$ et le terminal $UE_j$, et $S$ est une association possible dudit sous-ensemble.

Le réseau de télécommunication hétérogène peut être un réseau LTE ou LTE-A. Dans ce cas, la capacité du canal $C_{ij}$ peut être calculée à partir de la mesure $RSRP_{ij}$ obtenue comme la moyenne de puissance des signaux $CSRS_i$, spécifiques à la cellule servie par la station de base $BS_i$, sur l'élément de ressource de cette station de base.

La méthode d'association peut être exécutée avec une période prédéterminée, ou automatiquement à chaque fois qu'un terminal demande à se connecter au réseau, ou bien encore automatiquement à chaque procédure de handover d'un terminal, voire sur requête d'un terminal lorsque le niveau de sa batterie est inférieur à un niveau de seuil prédéterminé.

Ladite méthode d'association peut être exécutée de manière distribuée au sein des différentes stations de base, ou bien de manière centralisée par un contrôleur situé dans la station de base de la macro-cellule.

La maximisation de la métrique sur le sous-ensemble des associations respectant ladite contrainte d'utilisation peut notamment être obtenue par la méthode des multiplicateurs de Lagrange.

## BRÈVE DESCRIPTION DES DESSINS

D'autres caractéristiques et avantages de l'invention apparaîtront à la lecture d'un mode de réalisation préférentiel de l'invention en référence aux figures jointes parmi lesquelles :

La Fig. 1 représente schématiquement le mécanisme d'expansion d'une petite cellule dans un réseau hétérogène de l'état de la technique;
La Fig. 2 représente schématiquement un ordinogramme de la méthode d'association de terminaux à des cellules selon un mode de réalisation de l'invention.

## EXPOSÉ DÉTAILLÉ DE MODES DE RÉALISATION PARTICULIERS

Nous considérerons à nouveau un réseau cellulaire hétérogène formé de macro-cellules et de petites cellules (au sens défini plus haut), déployées au sein des macro-cellules. Un exemple typique de réseau hétérogène est un réseau de type LTE ou LTE-A.

Le procédé d'association consiste à attribuer à chaque terminal parmi une pluralité $J$ de terminaux ou UEs (*User Equipments*) une cellule ou, de manière équivalente une station de base, parmi une pluralité $N$ de stations de base. Plus précisément, si l'on note $UE_j$, $j = 1,...,J$ les terminaux et $BS_i$, $i = 1,...,N$, les stations de base, l'association des terminaux avec les stations de base est définie par une injection $S$ de l'ensemble $SUE=\{UE_1,...UE_J\}$ dans l'ensemble $SBS=\{SBS_1,...,SBS_N\}$, associant à chaque terminal $UE_j$ une station de base $BS_i =S(UE_j)$. L'association peut également être définie par l'ensemble des couples $(UE_j, S(UE_j))$, $j = 1,...,J$ formés par les terminaux et les stations de base auxquelles ils sont associés. L'ensemble des associations $S$ possibles entre les terminaux et les stations de base est noté $\Gamma$.

Le procédé d'association peut être lancé lors de l'admission d'un terminal dans le réseau ou bien avant d'initier une opération de handover, ou bien à l'initiative d'un terminal lorsqu'il constate une dégradation de la qualité de la liaison radio, à l'initiative d'une station de base, ou bien encore de manière périodique pour tout ou partie du réseau.

L'idée à la base de l'invention est d'optimiser l'association des terminaux aux stations de base en tenant compte d'au moins une contrainte sur l'utilisation des terminaux par les différents utilisateurs.

Lorsqu'une puissance d'émission est attribuée à chaque terminal, une des contraintes peut être un pourcentage maximal de terminaux pouvant émettre avec des puissances supérieures à leurs puissances de consigne respectives.

Lorsqu'un débit de consigne est assigné à chaque terminal, une des contraintes peut être un pourcentage maximal de terminaux pouvant recevoir des données avec des débits inférieurs à leurs débits de consigne respectifs.

Lorsqu'un niveau de qualité de service est requis pour la liaison radio (descendante) de chaque terminal, une des contraintes peut être un pourcentage maximal de terminaux dont les liaisons radio ne respectent pas les niveaux de qualité de service requis.

Les contraintes peuvent être du même type (puissance d'émission, débit de consigne, niveau de qualité de service) pour l'ensemble des terminaux. Alternativement, elles peuvent différer d'un terminal à l'autre. En outre, un terminal pourra être soumis à différentes contraintes de types différents. Ainsi, un terminal pourra participer à une contrainte portant sur le débit de consigne mais non à une contrainte portant sur la puissance d'émission.

D'autres contraintes relatives à l'utilisation des terminaux pourront être envisagées par l'homme du métier sans sortir du cadre de la présente invention.

De manière générale, si les paramètres d'utilisation des différents terminaux $UE_j$ sont notés $\ell_j^k$, $k = 1,..., K$ avec $K \geq 1$, les $JK$ contraintes $L_j^k$ peuvent être représentées par un polytope $V_L$ de dimension $JK$ dans l'espace des paramètres d'utilisation. Lorsque le point $\Omega$ de coordonnées $\ell_j^k$, $j = 1,..., J$, $k = 1,...,K$ appartient au polytope $V_L$ les contraintes sur les paramètres d'utilisation des terminaux sont respectées.

La méthode d'association selon la présente invention vise à maximiser une métrique caractéristique de la capacité globale des liaisons radio entre les terminaux et les stations de base qui leur sont respectivement associées.

Selon une première variante de réalisation, la métrique caractéristique de la capacité globale des liaisons radio s'exprime sous la forme :

$$\mu\big(C(S)\big) = \sum_{(UE_j, B_i = S(UE_j))} C_{ij} \qquad (1)$$

où $C_{ij}$ est la capacité du canal (descendant) entre la station de base $BS_i$ et le terminal $UE_j$, et $S$ est l'association considérée. L'expression $\mu(C(S))$ rappelle que la valeur de la métrique dépend de l'association $S$ que l'on considère.

Selon une seconde variante de réalisation, la métrique caractéristique de la capacité globale des liaisons radio s'exprime sous la forme :

$$\mu\big(C(S)\big) = \sum_{(UE_j, B_i = S(UE_j))} \log\big(C_{ij}\big) \qquad (2)$$

pour permettre d'obtenir une distribution équitable de la charge entre stations de base. En effet, une distribution de charge différente de celle qui maximise l'équation (2) et qui augmenterait la capacité d'un utilisateur, conduirait à une réduction la capacité moyenne globale du système. On trouvera une description du concept d'allocation équitable de ressources radios dans l'article de H. Kim et Y. Han intitulé "A proportional fair scheduling for multicarrier transmission systems," IEEE Communications Letters, vol.9, no.3, pp.210-212, March 2005.

Lorsque le réseau hétérogène est un réseau de type LTE ou LTE-A, la capacité du canal $C_{ij}$ entre la station de base $BS_i$ et le terminal $UE_j$ intervenant dans le calcul de la métrique (1) ou (2) peut être déterminée à partir de la mesure $RSRP_{ij}$ de la puissance des signaux de référence spécifiques de la cellule $i$ reçus par le terminal $UE_j$. Plus précisément, $RSRP_{ij}$ est obtenue comme la moyenne de la puissance des signaux $CSRS_i$ reçus par le terminal $UE_j$, la moyenne étant calculée sur les éléments de ressource utilisés par la station de base $BS_i$. La capacité $C_{ij}$ est obtenue par la formule de Shannon:

$$C_{ij} = F_{ij} \log_2\big(1 + SINR_{ij}\big) \qquad (3)$$

où $SINR_{ij}$ indique le ratio moyen entre la puissance du signal de la station de base $i$ mesurée par l'utilisateur $j$ et la somme du bruit thermique de variance $\sigma^2$ plus l'interférence générée par les stations de base voisines, soit :

$$SINR_{ij} = \frac{RSRP_{ij}}{\sum_{k \neq i} RSRP_{kj} + \sigma^2} \qquad (4)$$

Le facteur $F_{ij}$ indique la quantité moyenne des ressources de fréquence qui peuvent être allouées à l'utilisateur $j$. Si la bande totale ($F$) est partagée entre les utilisateurs associés à la station de base $i$, on a :

$$F_{ij} = \frac{F}{\displaystyle\sum_{\left(UE_j, B_i = S(UE_j)\right)} 1} \qquad (5)$$

Le procédé d'association recherche alors dans l'ensemble $\Gamma$ des associations possibles, le sous-ensemble $\Gamma_L$ des associations permettant de vérifier les contraintes des différents utilisateurs. On détermine alors l'association optimale, notée $S^*$, vérifiant :

$$S^* = \arg\max_{S \in \Gamma_L} \left(\mu(S)\right) \qquad (6)$$

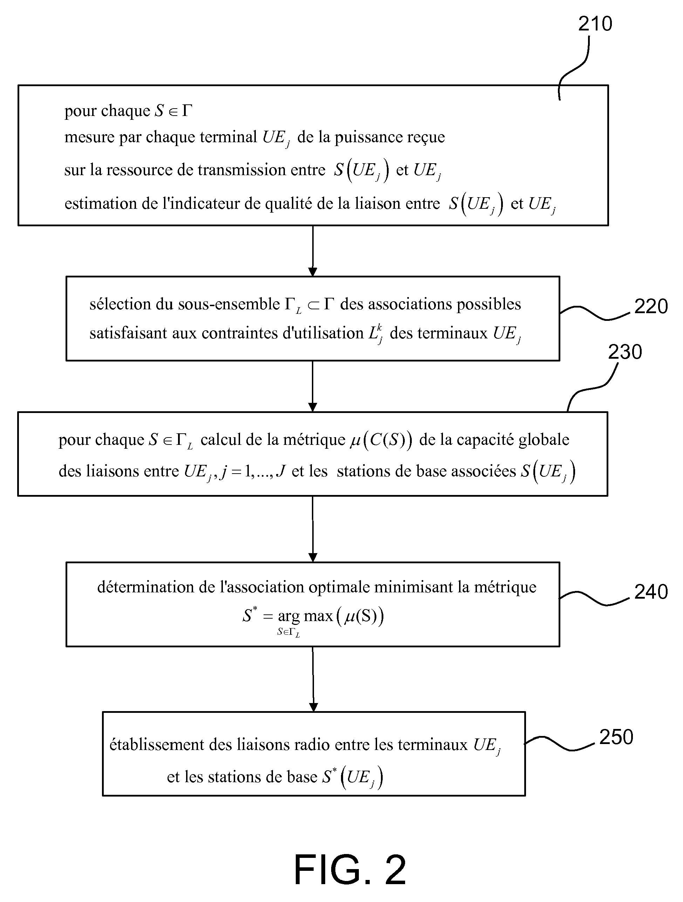

La Fig. 2 représente schématiquement le procédé d'association de terminaux à des cellules selon un mode de réalisation de l'invention.

A l'étape 210, pour chaque association possible $S \in \Gamma$, chaque terminal $UE_j$, $j = 1,...,J$, effectue une mesure de puissance sur la ressource de transmission utilisée par la station de base $BS_i = S(UE_j)$. Cette ressource de transmission peut être celle utilisée par des signaux de référence de la cellule $i$ servie par la station de base $BS_i$. La puissance ainsi mesurée est ensuite utilisée pour estimer un indice de qualité de la liaison radio entre les station de base $BS_i = S(UE_j)$ et le terminal $UE_j$.

Par exemple, si le réseau cellulaire est un réseau LTE ou LTE-A, la mesure de puissance est réalisée sur les signaux *CSRSs* et l'indice de qualité ainsi estimé est l'indice *RSRQ*.

A l'étape 220, on sélectionne parmi l'ensemble $\Gamma$ des associations possibles, un sous-ensemble $\Gamma_L$ d'associations possibles satisfaisant aux contraintes d'utilisation $L_j^k$ des terminaux $UE_j$, $j = 1,...,J$. La sélection du sous-ensemble des associations possibles satisfaisant à ces contraintes est réalisée à partir des indices de qualité des liaisons radio estimées à l'étape précédente. On pourra choisir le sous-ensemble comme celui satisfaisant au mieux les contraintes d'utilisation $L_j^k$, par exemple puissance d'émission minimale, débit maximal, qualité de service maximale, puissance électromagnétique maximale à une distance prédéterminée de chaque terminal, ou bien encore pourcentage de terminaux ne satisfaisant pas les consignes de puissance, les débits et qualités de service requis correspondant à un minimum, voire une combinaison quelconque des contraintes précitées. Lorsque les contraintes sont linéaires, les associations permettant d'obtenir la meilleure satisfaction des contraintes sont celles qui correspondent à la surface du polytope $V_L$.

A l'étape 230, on calcule pour chaque association $S$ du sous-ensemble $\Gamma_L$, la valeur d'une métrique $\mu(C(S))$ caractéristique de la capacité globale des liaisons radio entre les terminaux $UE_j$, $j = 1,..., J$ et les stations de base qui leur sont associées $S(UE_j)$. La métrique pourra notamment avoir la forme donnée par l'expression (1) ou l'expression (2).

A l'étape 240, on détermine enfin l'association optimale $S^*$ qui minimise la capacité globale desdites liaisons radio, autrement dit $S^* = \arg\max_{S \in \Gamma_L} \left(\mu(S)\right)$.

La détermination de l'association optimale à l'étape 240 peut être effectuée selon une approche dite de force brute *(brute force)* dans laquelle on passe en revue de manière exhaustive toutes les associations possibles de l'ensemble $\Gamma_L$. Alternativement, lorsque les contraintes sont linéaires, la recherche de l'association optimale pourra être effectuée selon la méthode des multiplicateurs de Lagrange connue en soi. Alternativement encore, la recherche pourra être effectuée selon un algorithme du plus fort gradient *(steepest descent)* également connu en soi.

Enfin, à l'étape 250, on établit les liaisons radio entre les terminaux et les stations de base associés à ces terminaux selon l'association optimale déterminée à l'étape précédente. Autrement dit, on établit une liaison entre les terminaux $UE_j$ et les stations de base $S^*(UE_j)$.

Le procédé d'association peut être mis en oeuvre de manière centralisée ou bien de manière distribuée au sein du réseau. Dans une solution centralisée, les mesures relatives aux liaisons radio sont réalisées par les terminaux des utilisateurs puis collectées et transmises par les stations de base à un contrôleur dédié qui détermine l'association optimale. Ce contrôleur pourra être hébergé par la station de base servant la macro-cellule ou bien par un serveur chargé des fonctionnalités de fonctionnement et de gestion du réseau, dénommé serveur OAM *(Operation And Management)*.

**Revendications**

1. Méthode d'association de terminaux à des cellules dans un réseau de télécommunication hétérogène comprenant au moins une macro-cellule et une pluralité de cellules, dites petites cellules, de taille sensiblement plus faible que ladite macro-cellule et déployées au sein de cette dernière, la macro-cellule et les desdites petites cellules étant servies par une pluralité de stations de base, chaque terminal pouvant établir une liaison radio avec une station de base au moyen d'une ressource en fréquence, **caractérisée en ce que** :

   chaque terminal effectue (210) une mesure de puissance sur la ressource en fréquence de manière à obtenir, pour chaque association possible associant ce terminal à une station de base, un indice de qualité d'une liaison radio entre ce terminal et cette station de base ;
   on sélectionne (220) parmi l'ensemble ($\Gamma$) des associations possibles entre les terminaux et les stations de base, un sous-ensemble ($\Gamma_L$) d'associations satisfaisant à au moins une contrainte ($L$) relative à l'utilisation desdits terminaux, la sélection étant réalisée à partir des indices de qualité des liaisons radio ;
   on calcule (230) pour chaque association possible dudit sous-ensemble, une métrique caractéristique de la capacité globale des liaisons radio entre terminaux et stations de base associés par cette association possible et l'on détermine (240) une association optimale ($S^*$) maximisant cette métrique ;
   on établit (250) des liaisons radio entre les terminaux et les stations de base associés par l'association optimale ($S^*$) ainsi déterminée.

2. Méthode d'association de terminaux à des cellules selon la revendication 1, **caractérisée en ce qu'**une puissance de consigne étant attribuée à chaque terminal, la contrainte relative à l'utilisation des terminaux est un pourcentage maximal des terminaux pouvant émettre avec des puissances supérieures à leurs puissances de consigne respectives.

3. Méthode d'association de terminaux à des cellules selon la revendication 1, **caractérisée en ce qu'**un débit de consigne étant attribué à chaque terminal, la contrainte relative à l'utilisation des terminaux est un pourcentage maximal de terminaux pouvant recevoir des débits de données inférieurs à leurs débits de consigne respectifs.

4. Méthode d'association de terminaux à des cellules selon la revendication 1, **caractérisée en ce qu'**un niveau de qualité de service (QoS) étant requis par chaque terminal, la contrainte relative à l'utilisation des terminaux est un pourcentage maximal de terminaux pouvant disposer de niveaux de qualité de service inférieurs aux niveaux de qualité de service qu'ils ont respectivement requis.

5. Méthode d'association de terminaux à des cellules selon la revendication 1, **caractérisée en ce que** ledit sous-ensemble d'associations satisfait à une pluralité de contraintes relative à l'utilisation desdits terminaux, ladite pluralité de contraintes étant choisie parmi une combinaison quelconque de :

   - pourcentage maximal des terminaux pouvant émettre avec des puissances supérieures à leurs puissances de consigne respectives ;
   - pourcentage maximal de terminaux pouvant recevoir des débits de données inférieurs à leurs débits de consigne respectifs ;
   - pourcentage maximal de terminaux pouvant disposer de niveaux de qualité de service inférieurs aux niveaux de qualité de service respectivement requis ;
   - puissance électromagnétique maximale à une distance prédéterminée de chaque terminal.

6. Méthode d'association de terminaux à des cellules selon l'une des revendications précédentes **caractérisée en ce que** la métrique des liens radio entre les terminaux $UE_j$, $j = 1,...,J$ et les stations de base $BS_i$, $i=1,...,N$ est définie par $\displaystyle\sum_{(UE_j,BS_i=\mathrm{S}(UE_j))} C_{ij}$ où $C_{ij}$ est la capacité du canal entre la station de base $BS_i$ et le terminal $UE_j$, et $S$ est une association possible dudit sous-ensemble.

7. Méthode d'association de terminaux à des cellules selon l'une des revendications 1 à 6, **caractérisée en ce que** la métrique des liens radio entre les terminaux $UE_j$, $j = 1,...,J$ et les stations de base $BS_i$, $i = 1,...,N$ est définie par

$$\sum_{(UE_j, BS_i = \mathrm{S}(UE_j))} \log C_{ij}$$ où $C_{ij}$ est la capacité du canal entre la station de base $BS_i$ et le terminal $UE_j$, et $S$ est une association possible dudit sous-ensemble.

8. Méthode d'association de terminaux à des cellules selon la revendication 6 ou 7, **caractérisée en ce que** le réseau de télécommunication hétérogène est un réseau LTE ou LTE-A et que la capacité du canal $C_{ij}$ est calculée à partir de la mesure $RSRP_{ij}$ obtenue comme la moyenne de puissance des signaux $CSRS_i$, spécifiques à la cellule servie par la station de base $BS_i$, sur l'élément de ressource de cette station de base.

9. Méthode d'association de terminaux à des cellules selon l'une des revendications précédentes, **caractérisée en ce qu'**elle est exécutée avec une période prédéterminée.

10. Méthode d'association de terminaux à des cellules selon l'une des revendications 1 à 8, **caractérisée en ce qu'**elle est exécutée automatiquement à chaque fois qu'un terminal demande à se connecter au réseau.

11. Méthode d'association de terminaux à des cellules selon l'une des revendications 1 à 8, **caractérisée en ce qu'**elle est exécutée automatiquement à chaque procédure de handover d'un terminal.

12. Méthode d'association de terminaux à des cellules selon l'une des revendications précédentes, **caractérisée en ce qu'**elle est exécutée sur requête d'un terminal lorsque le niveau de sa batterie est inférieur à un niveau de seuil prédéterminé.

13. Méthode d'association de terminaux à des cellules selon l'une des revendications précédentes, **caractérisée en ce qu'**elle est exécutée de manière distribuée au sein des différentes stations de base.

14. Méthode d'association de terminaux à des cellules selon l'une des revendications 1 à 12, **caractérisée en ce qu'**elle est exécutée de manière centralisée par un contrôleur situé dans la station de base de la macro-cellule.

15. Méthode d'association de terminaux à des cellules selon l'une des revendications précédentes, **caractérisée en ce que** la maximisation de la métrique sur le sous-ensemble des associations respectant ladite contrainte d'utilisation est obtenue par la méthode des multiplicateurs de Lagrange.

FIG. 1

210

pour chaque $S \in \Gamma$

mesure par chaque terminal $UE_j$ de la puissance reçue

sur la ressource de transmission entre $S(UE_j)$ et $UE_j$

estimation de l'indicateur de qualité de la liaison entre $S(UE_j)$ et $UE_j$

sélection du sous-ensemble $\Gamma_L \subset \Gamma$ des associations possibles

satisfaisant aux contraintes d'utilisation $L_j^k$ des terminaux $UE_j$

220

230

pour chaque $S \in \Gamma_L$ calcul de la métrique $\mu(C(S))$ de la capacité globale

des liaisons entre $UE_j, j = 1, ..., J$ et les stations de base associées $S(UE_j)$

détermination de l'association optimale minimisant la métrique

$$S^* = \underset{S \in \Gamma_L}{\arg\max} \left( \mu(S) \right)$$

240

établissement des liaisons radio entre les terminaux $UE_j$

et les stations de base $S^*(UE_j)$

250

FIG. 2

Europäisches
Patentamt

European
Patent Office

Office européen
des brevets

**RAPPORT DE RECHERCHE EUROPEENNE**

Numéro de la demande

EP 16 16 6866

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2010/108138 A2 (QUALCOMM INC [US]; BORRAN JABER MOHAMMAD [US]; KHANDEKAR AAMOD D [US]) 23 septembre 2010 (2010-09-23) | 1-4,6,7, 9-11,13, 14 | INV. H04W36/16 H04W48/20 |
| Y | * alinéa [0019] - alinéa [0020] * * alinéa [0022] * * alinéa [0025] * * alinéa [0027] - alinéa [0029] * * alinéa [0036] - alinéa [0038] * * alinéa [0040] - alinéa [0044] * * alinéa [0059] - alinéa [0060] * * alinéa [0062] - alinéa [0065] * * alinéa [0067] * * alinéa [0080] * * figures 1, 2, 3 * * alinéa [0033] * ----- | 8,12,15 | ADD. H04W84/04 H04W28/08 |
| Y | WO 2014/113072 A1 (INTEL IP CORP [US]; YEH SHU-PING [CN]; HIMAYAT NAGEEN [US]; TALWAR SHI) 24 juillet 2014 (2014-07-24) * page 5, ligne 25 - page 6, ligne 1 * * page 9, ligne 14 - page 10, ligne 3 * ----- -/-- | 12,15 | |

DOMAINES TECHNIQUES RECHERCHES (IPC)

H04W

Le présent rapport a été établi pour toutes les revendications

| Lieu de la recherche | Date d'achèvement de la recherche | Examinateur |
|---|---|---|
| Munich | 29 août 2016 | Ruscitto, Alfredo |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
..........................................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 16 16 6866

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 12)", 3GPP DRAFT; DRAFT_36300-C50_WITH_REV_MARKS_UPDATE2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 mars 2015 (2015-03-23), XP050952035, Extrait de l'Internet: URL:http://www.3gpp.org/ftp/tsg_ran/WG2_RL 2/Specifications/201503_draft_specs_after_ RAN_67/ [extrait le 2015-03-23] * paragraph 5.1.8 * ----- | 8 | |
| A | US 2004/253962 A1 (GANTI ANAND [US] ET AL) 16 décembre 2004 (2004-12-16) * alinéa [0054] - alinéa [0073] * * figures 1,5 * ----- | 1-15 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 29 août 2016 | Ruscitto, Alfredo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................
& : membre de la même famille, document correspondant

EPO FORM 1503 03.82 (P04C02)

## ANNEXE AU RAPPORT DE RECHERCHE EUROPEENNE
### RELATIF A LA DEMANDE DE BREVET EUROPEEN NO.

EP 16 16 6866

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-08-2016

| Document brevet cité au rapport de recherche | Date de publication | Membre(s) de la famille de brevet(s) | | Date de publication |
|---|---|---|---|---|
| WO 2010108138 A2 | 23-09-2010 | CN | 102356653 A | 15-02-2012 |
| | | EP | 2409505 A2 | 25-01-2012 |
| | | JP | 5602827 B2 | 08-10-2014 |
| | | JP | 2012521677 A | 13-09-2012 |
| | | JP | 2014212561 A | 13-11-2014 |
| | | KR | 20110139297 A | 28-12-2011 |
| | | TW | 201119424 A | 01-06-2011 |
| | | US | 2010238884 A1 | 23-09-2010 |
| | | US | 2013028230 A1 | 31-01-2013 |
| | | WO | 2010108138 A2 | 23-09-2010 |
| WO 2014113072 A1 | 24-07-2014 | CN | 104854916 A | 19-08-2015 |
| | | CN | 104871444 A | 26-08-2015 |
| | | CN | 104871447 A | 26-08-2015 |
| | | CN | 104885389 A | 02-09-2015 |
| | | CN | 104885390 A | 02-09-2015 |
| | | CN | 104885504 A | 02-09-2015 |
| | | CN | 104969503 A | 07-10-2015 |
| | | CN | 104995855 A | 21-10-2015 |
| | | CN | 105009478 A | 28-10-2015 |
| | | CN | 105009511 A | 28-10-2015 |
| | | CN | 105027597 A | 04-11-2015 |
| | | CN | 105144789 A | 09-12-2015 |
| | | EP | 2946490 A1 | 25-11-2015 |
| | | EP | 2946491 A1 | 25-11-2015 |
| | | EP | 2946492 A1 | 25-11-2015 |
| | | EP | 2946496 A1 | 25-11-2015 |
| | | EP | 2946525 A1 | 25-11-2015 |
| | | EP | 2946582 A1 | 25-11-2015 |
| | | EP | 2946587 A1 | 25-11-2015 |
| | | EP | 2946589 A1 | 25-11-2015 |
| | | EP | 2946590 A1 | 25-11-2015 |
| | | EP | 2946591 A1 | 25-11-2015 |
| | | EP | 2946604 A1 | 25-11-2015 |
| | | EP | 2946606 A1 | 25-11-2015 |
| | | EP | 2946607 A1 | 25-11-2015 |
| | | JP | 2016506659 A | 03-03-2016 |
| | | JP | 2016511557 A | 14-04-2016 |
| | | KR | 20150090121 A | 05-08-2015 |
| | | KR | 20150132080 A | 25-11-2015 |
| | | TW | 201434285 A | 01-09-2014 |
| | | TW | 201448548 A | 16-12-2014 |
| | | TW | 201614973 A | 16-04-2016 |
| | | US | 2014247759 A1 | 04-09-2014 |
| | | US | 2014307872 A1 | 16-10-2014 |
| | | US | 2014378123 A1 | 25-12-2014 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 16 16 6866

29-08-2016

| Document brevet cité au rapport de recherche | Date de publication | Membre(s) de la famille de brevet(s) | Date de publication |
|---|---|---|---|
| | | US 2015004969 A1 | 01-01-2015 |
| | | US 2015009870 A1 | 08-01-2015 |
| | | US 2015139087 A1 | 21-05-2015 |
| | | US 2015188690 A1 | 02-07-2015 |
| | | US 2015201374 A1 | 16-07-2015 |
| | | US 2015215989 A1 | 30-07-2015 |
| | | US 2015223133 A1 | 06-08-2015 |
| | | US 2015327247 A1 | 12-11-2015 |
| | | US 2015334152 A1 | 19-11-2015 |
| | | US 2015341838 A1 | 26-11-2015 |
| | | US 2015351139 A1 | 03-12-2015 |
| | | US 2015382281 A1 | 31-12-2015 |
| | | US 2016156454 A1 | 02-06-2016 |
| | | US 2016183149 A1 | 23-06-2016 |
| | | US 2016198343 A1 | 07-07-2016 |
| | | WO 2014113072 A1 | 24-07-2014 |
| | | WO 2014113073 A1 | 24-07-2014 |
| | | WO 2014113074 A1 | 24-07-2014 |
| | | WO 2014113075 A1 | 24-07-2014 |
| | | WO 2014113076 A1 | 24-07-2014 |
| | | WO 2014113078 A1 | 24-07-2014 |
| | | WO 2014113080 A1 | 24-07-2014 |
| | | WO 2014113082 A1 | 24-07-2014 |
| | | WO 2014113083 A1 | 24-07-2014 |
| | | WO 2014113084 A1 | 24-07-2014 |
| | | WO 2014113085 A1 | 24-07-2014 |
| | | WO 2014113087 A1 | 24-07-2014 |
| | | WO 2014113088 A1 | 24-07-2014 |
| | | WO 2014113095 A1 | 24-07-2014 |
| | | WO 2014113103 A1 | 24-07-2014 |
| | | WO 2014113141 A1 | 24-07-2014 |
| | | WO 2014113171 A1 | 24-07-2014 |
| | | WO 2014113190 A1 | 24-07-2014 |
| | | WO 2014113197 A1 | 24-07-2014 |
| US 2004253962 A1 | 16-12-2004 | AUCUN | |

EPO FORM P0460

## RÉFÉRENCES CITÉES DANS LA DESCRIPTION

**Littérature non-brevet citée dans la description**

- **S. PARKVALL et al.** Heterogeneous network deployment in LTE. *Ericsson Review,* vol. 2011
- **R. MADAN et al.** Cell association and interference coordination in heterogeneous LTE-A. *IEEE Journal on Selected Areas in Communications,* Décembre 2010, vol. 28 (9), 1479-1489
- **I. GÜVENÇ.** Capacity and fairness analysis of heterogeneous networks with range expansion and interference coordination. *IEEE Comm. Letters,* Octobre 2011, vol. 15 (10), 1084-1087
- **H. KIM ; Y. HAN.** A proportional fair scheduling for multicarrier transmission systems. *IEEE Communications Letters,* Mars 2005, vol. 9 (3), 210-212